# EUROPEAN PATENT SPECIFICATION

(11) **EP 4 299 389 B1**
(45) Date of publication and mention of the grant of the patent: **25.11.2026**
(21) Application number: 23176132.1
(22) Date of filing: 30.05.2023
(51) Int. Cl.: B60R 21/13, B60J 1/02

(54) **WORK VEHICLE WITH CURVED STRUCTURE**
ARBEITSFAHRZEUG MIT GEKRÜMMTER STRUKTUR
VÉHICULE DE TRAVAIL AVEC STRUCTURE INCURVÉE

(30) Priority: 30.06.2022 US 202217809925
(43) Date of publication of application: 03.01.2024
(73) Proprietor: Deere & Company, Moline, IL 61265 (US)
(72) Inventor: Subramanian, Arun, Chennai (IN); Morales, Roberto, Saltillo (MX); Legorreta, Jose, Saltillo (MX)
(74) Representative: Reddie & Grose LLP

(56) References cited:
- EP-A1- 2 660 134
- FR-A1- 2 882 722
- US-A1- 2005 073 140
- US-A1- 2010 147 603
- US-A1- 2016 176 449

## Description

### FIELD OF THE DISCLOSURE

The present disclosure relates to a curved structure for a work vehicle.

### BACKGROUND

Work vehicles can include curved structures near a vehicle operator. These structures can include roll over protection systems or ROPS. Many of these structures are positioned behind the operator seat.

US 2016/176449 A1 describes a method of constructing a wall assembly of an operator cab that involves: fastening a generally planar inner surface of a sheet metal exterior wall body of the wall assembly to a generally planar outer surface of a sheet-metal structural wall body of the wall assembly; and fastening a generally planar inner surface of the sheet-metal structural wall body to a generally planar outer surface of a sheet-metal interior wall body of the wall assembly. Also, a method of constructing an operator cab that involves: fastening a floor body to first and second spaced apart sheet-metal wall assemblies; fastening a rear wall body to the first and second sheet-metal wall assemblies and to the floor body; fastening a front wall body to the first and second sheet-metal wall assemblies and to the floor body; and fastening a ceiling body to the first and second sheet-metal wall assemblies. Operator cabs and kits are also disclosed.

US 2005/073140 discloses a roll-over protection structure designed to enhance operator safety on loader-equipped vehicles. The roll-over protective assembly can pivot between a protective (upright) position and a non-protective (flattened) position. This allows the assembly to be folded down toward the hood of the tractor when necessary to reduce the overall height of the vehicle and allow the vehicle to fit into constrained spaces. The loader is attached to support masts on either side of the vehicle. The protective structure and the loader mounting area on the mast are physically linked so that when the roll-over protection is not in the protective (upright) position it obstructs or occupies the mounting points for the loader to prevents the loader from being attached.

### SUMMARY

The Features of the claimed invention are provided in the independent claim, to which reference should now be made. Additional, optional features are provided in the dependent claims.

The above and other features will become apparent from the following detailed description and accompanying drawings.

### BRIEF DESCRIPTION OF THE DRAWINGS

The detailed description of the drawings refers to the accompanying figures in which:
FIGURE 1 is a perspective view of a work vehicle including a curved structure, according to an implementation;
FIGURE 2 is a top perspective view of a work vehicle including a curved structure, according to an implementation;
FIGURE 3 is a side perspective view of a work vehicle including a curved structure, according to an implementation;
FIGURE 4 is a front perspective view of a work vehicle including a curved structure, according to an implementation;
FIGURE 5 is a perspective view of a curved structure, according to an implementation;
FIGURE 6 is a detail view of a curved structure, according to an implementation;
FIGURE 7 is a side perspective view of a curved structure, according to an implementation;
FIGURE 8 is a side perspective view of a work vehicle including a curved structure, according to an unclaimed example;
FIGURE 9 is a top perspective view of a work vehicle including a curved structure, according to an unclaimed example;
FIGURE 10 is a side perspective view of a work vehicle including a curved structure, according to an unclaimed example;
FIGURE 11 is a front perspective view of a work vehicle including a curved structure, according to an unclaimed example; and
FIGURE 12 is a top perspective view of a work vehicle including a curved structure, according to an unclaimed example.

Like reference numerals are used to indicate like elements throughout the several figures.

### DETAILED DESCRIPTION

The implementations disclosed in the above drawings and the following detailed description are not intended to be exhaustive or to limit the present disclosure to these implementations.

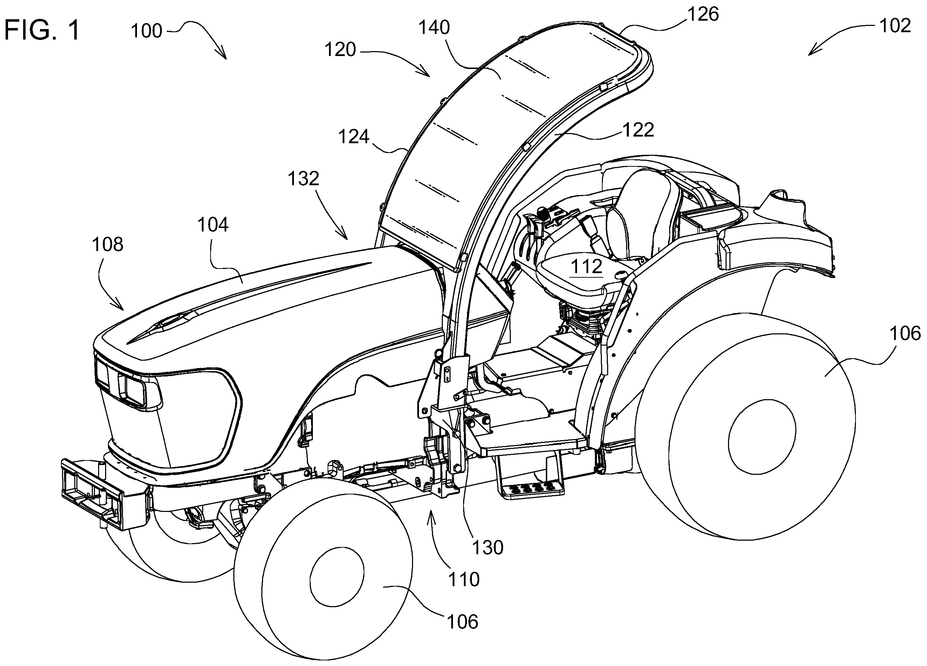

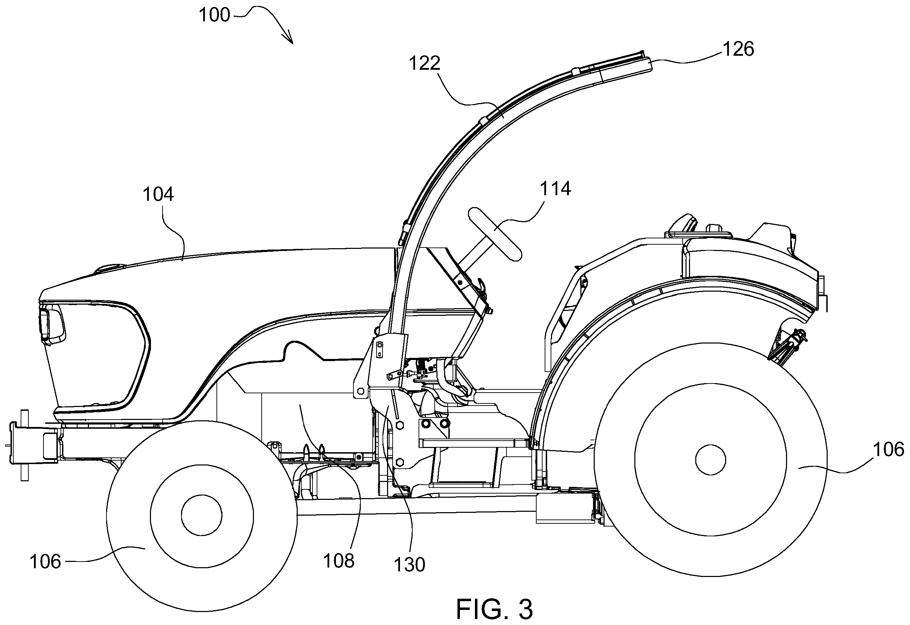

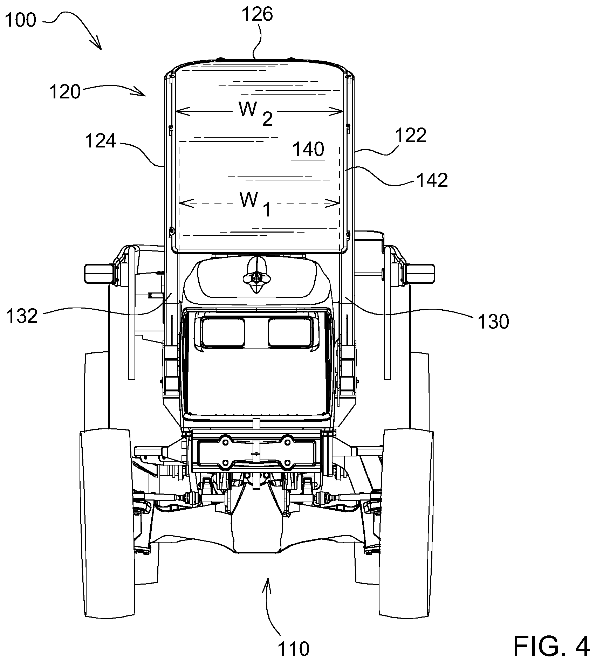

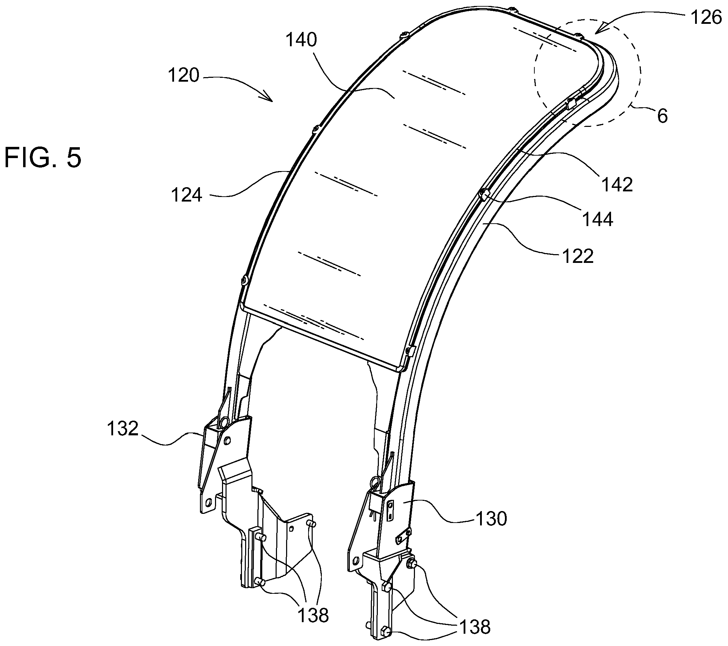

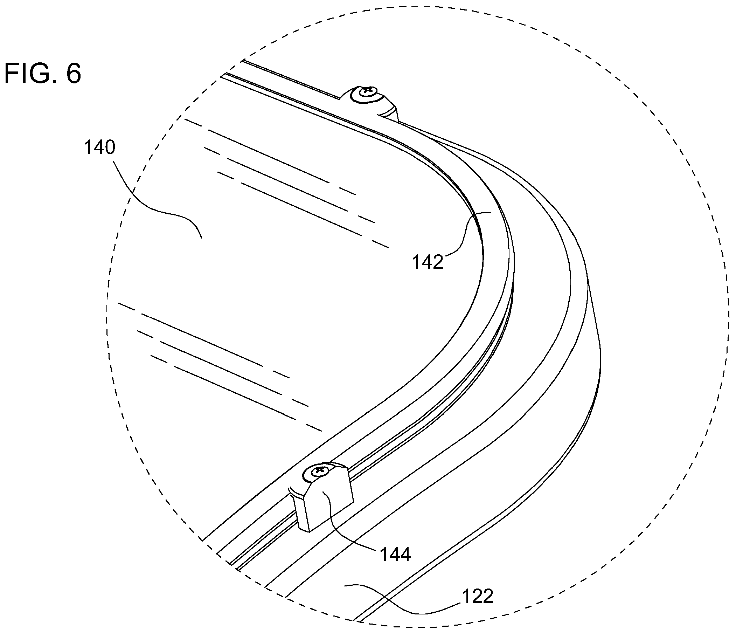

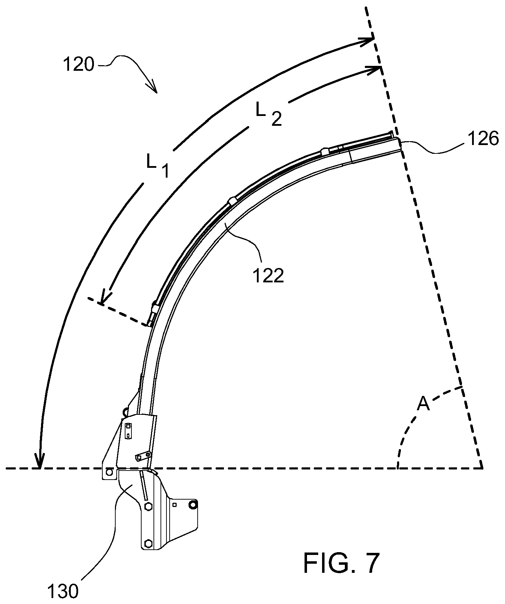

With reference to FIGURES 1-7, a curved structure 120 can be attached or installed on a work vehicle 100, such as a tractor. The present disclosure also applies to other types of work vehicles in agriculture, construction, road building, forestry, utility, turf, and lawn care. The work vehicle 100 can includes an open operator station 102 having various devices and controls to operate the work vehicle 100. The work vehicle 100 includes a hood 104, one or more ground engaging apparatus 106, a power source 108, and a frame or chassis 110. The work vehicle 100 includes a seat 112. The curved structure 120 can include a first support 122, a second support 124 spaced apart a width W₁ from the first support 122, and a windscreen or windshield 140 positioned between and connected to the first and second supports 122, 124. The first and second supports 122, 124 can each be arcuate or curvilinear and extend a length L₁. The windshield 140 can be curvilinear or curved and extend a width W₂ and a length L₂. The windshield 140 can have a shorter length L₂ than the length L₁ of the first and second supports 122, 124. The windshield 140 can have a larger width W₂ than the width W₁ of the space between the first and second supports 122, 124. The windshield 140 can include a frame 142 surrounding at least a portion of the windshield 140.

The curved structure 120 can include a top support 126 connected near an end of the first support 122 and near an end of the second support 124. The end of the first support 122 and the end of the second support 124 can curve inwards towards each other. the top support 126 can connect the inwardly curving ends of the first and second supports 122, 124. In some implementations, the first curved support 122, the second curved support 124, and the top support 126 are a single or unitary piece or part. The curved structure 120 can include a curvilinear or curved transition between the first support 122 and the top support 126 and between the second support 124 and the top support 126. The frame 142 can have one or more connectors 144 to connect or attach the windshield 140 to one or more of the first, second, and top supports 122, 124, 126. using fasteners, for example. The other ends of the first and second supports 122, 124 can include first and second base portions 130, 132 configured to mount to a frame or chassis 110 of a work vehicle 100.

The first support 122, the second support 124, or both can form an arc having an angle A of any size, dimension, or range. The first and second supports 122, 124 and the windshield 140 can have a similar or the same curvilinear shape or radius of curvature, which can be fixed or variable. According to some implementations, an angle A of an arc formed by the first support 122 is greater than forty-five degrees (45°), greater than seventy-five degrees (75°), or greater than ninety degrees (90°). According to other implementations, an angle A of an arc formed by the first curved support 122 is less than one hundred thirty-five degrees (135°), less than one hundred twenty degrees (120°), less than one hundred degrees (100°), or less than ninety degrees (90°). According to other implementations, an angle A of an arc formed by the first support 122 is between sixty and one hundred twenty degrees (60°-120°), between seventy-five and one hundred five degrees (75°-105°), or between eighty and one hundred degrees (80°-100°).

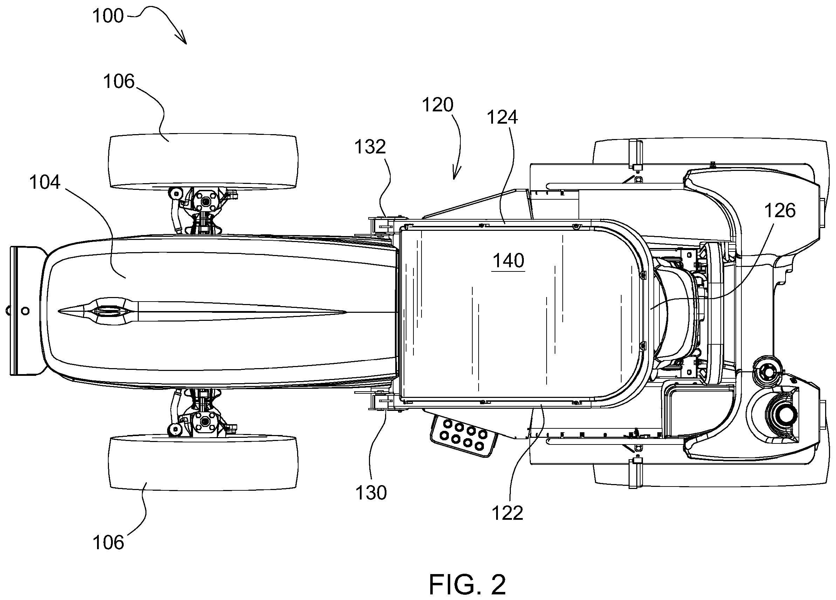

The curved structure 120 can connect to the work vehicle 100 at a position or location forward of the operator station 102. The first and second base portions 130, 132 of the curved structure 120 can include fasteners 138 to attach to the work vehicle 100. The first and second base portions 130, 132 can attach to frame or chassis 110 of the work vehicle 100 at a position or location forward of a steering wheel 114 of the work vehicle 100. When the curved structure 120 is installed in a work vehicle 100, a top portion of the curved structure 120 can extend upward and rearward beyond a front portion of a seat 112 in the work vehicle 100. The windshield 140 can extend vertically and horizontally beyond a front portion of a seat 112 in the work vehicle 100. In some implementations, the top portion of the curved structure 120 and the windshield 140 can extend upward and rearward beyond a majority of the seat 112, as shown for example in FIGURE 2.

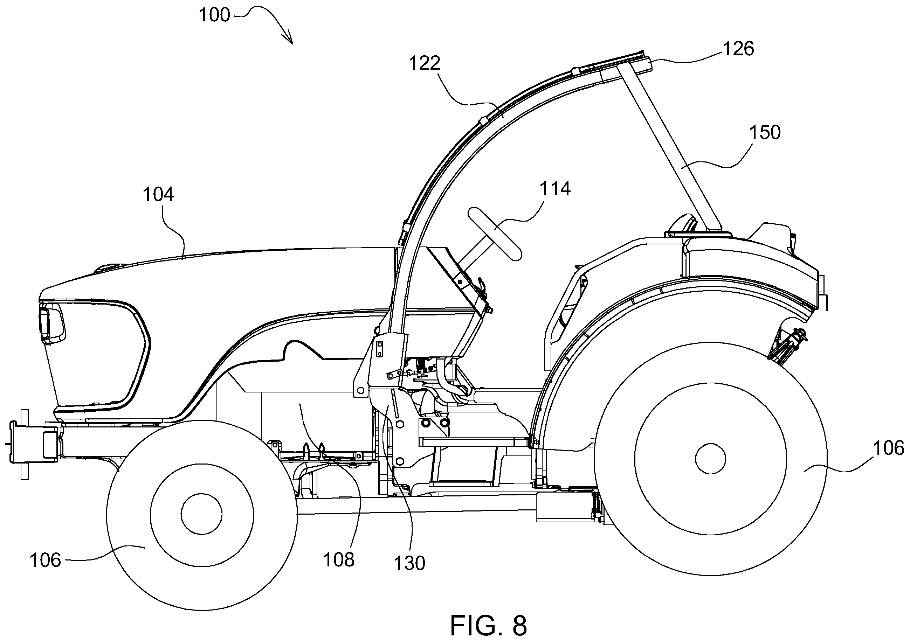

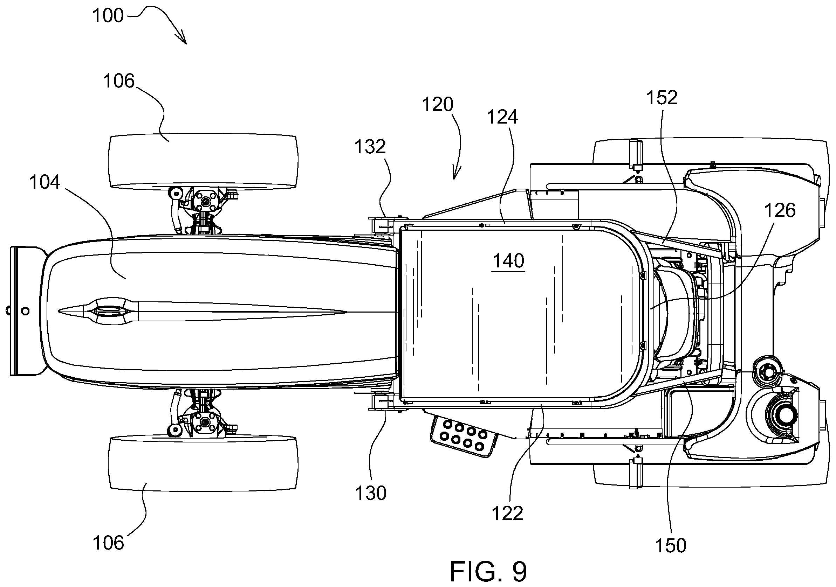

With reference to FIGURES 8-9, one or more rear supports 150, 152 can connect to the curved support 120 and to the work vehicle 100. The curved structure 120 can include a first rear support 150 connected near an end of the first support 122 and to the work vehicle 100. The curved structure 120 can include a second rear support 152 connected near an end of the second support 124 and to the work vehicle 100. Alternatively, or additionally, the first and second rear supports 150, 152 can connect to the top support 126 or to the transitions between the top support 126 and the first and second supports 122, 124. The first and second rear supports 150, 152 can be angled forward from the work vehicle 100 to the curved structure 120, as shown. Alternatively, the first and second rear supports 150, 152 can be angled rearward from the work vehicle 100 to the curved structure 120, or the first and second rear supports 150, 152 can extend substantially vertical from the work vehicle 100 to the curved structure 120.

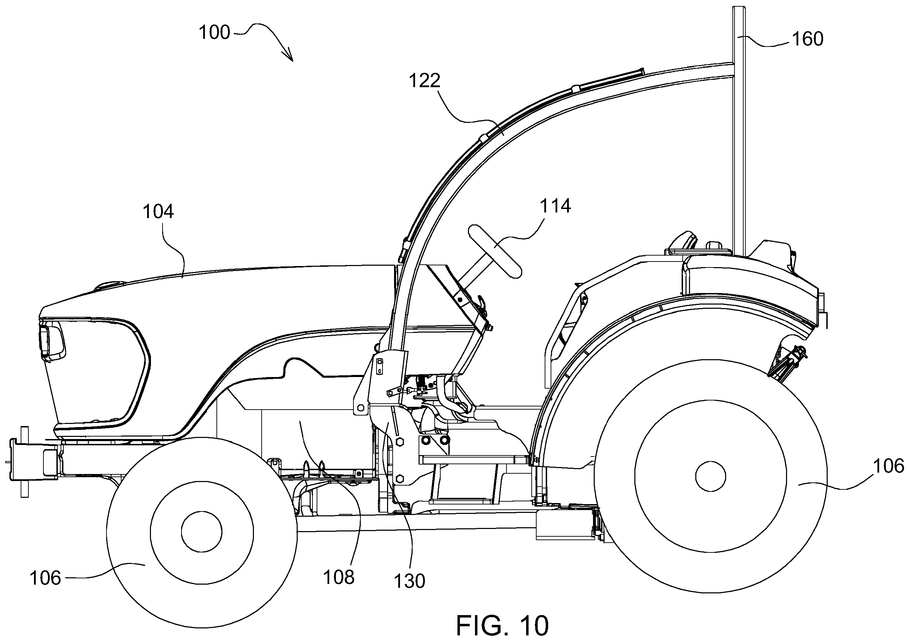

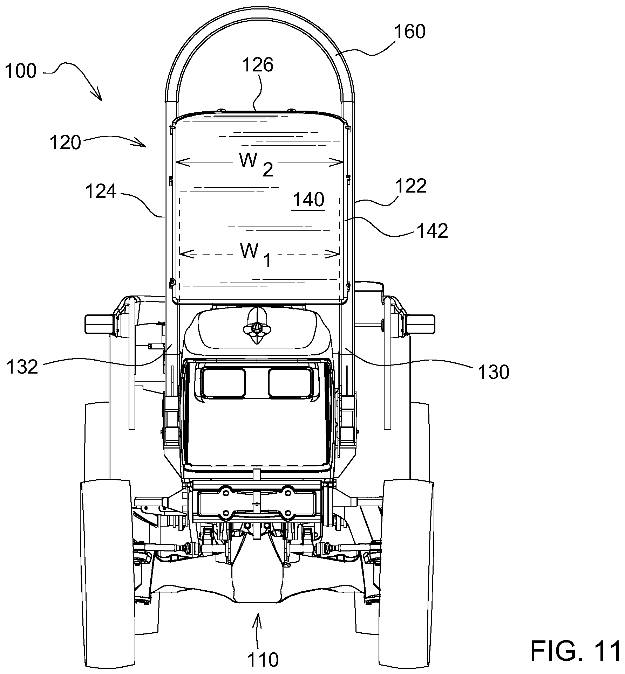

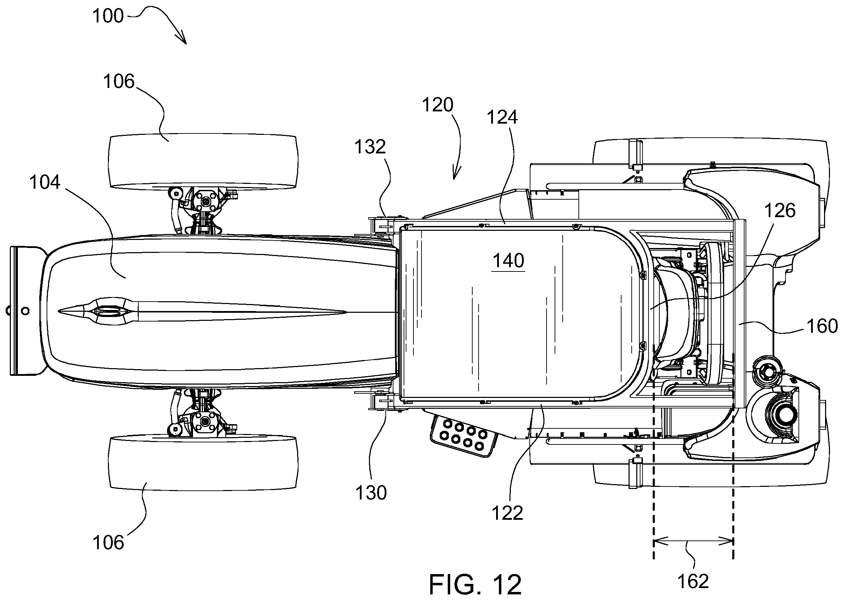

With reference to FIGURES 10-12, a curved support 120 can connect to a rear support 160 attached to the work vehicle 100. The rear support 160 can be substantially vertical. The rear support 160 can be in the form of a roll bar. The rear support 160 can extend above the curved support 120. The first and second supports 122, 124 can extend rearward to the rear support 160. The first and second supports 122, 124 can connect to the rear support 160. The windshield 140 can extend to the rear support 160 or there can be a selected distance 162 between the windshield 140 and the rear support 160 forming an opening between the windshield 140 and the rear support 160. The curved support 120 can include a top support 126. According to some implementations, the top support 126 is an optional support member.

When the curved structure 120 is installed on a work vehicle 100, the curved structure 120 can provide a barrier against vegetation (e.g., limbs, branches, bushes, or shrubs) from contacting an operator of the work vehicle 100. The curved structure 120 can prevent vegetation extending within a boundary of the work vehicle 100 from entering the open operator station 102. The curved structure 120 also allows extensive visibility of the operating area surrounding the work vehicle 100. During forward operation of the work vehicle 100, the curved structure 120 can guide vegetation up and over the open operator station 102 and the operator of the work vehicle 100. The curved structure 120 can also function as a roll over protection system, or roll over protective structure, referred to as ROPS.

Those having ordinary skill in the art will recognize that terms such as "above," "below," "upward," "downward," "top," "bottom," etc., are used descriptively for the figures, and do not represent limitations on the scope of the present disclosure, as defined by the appended claims. Furthermore, the teachings may be described herein in terms of functional and/or logical block components or various processing steps, which may include any number of hardware, software, and/or firmware components configured to perform the specified functions.

Terms of degree, such as "generally," "substantially," or "approximately" are understood by those having ordinary skill in the art to refer to reasonable ranges outside of a given value or orientation, for example, general tolerances or positional relationships associated with manufacturing, assembly, and use of the described implementations.

As used herein, "e.g.," is utilized to non-exhaustively list examples and carries the same meaning as alternative illustrative phrases such as "including," "including, but not limited to," and "including without limitation." Unless otherwise limited or modified, lists with elements that are separated by conjunctive terms (e.g., "and") and that are also preceded by the phrase "one or more of" or "at least one of" indicate configurations or arrangements that potentially include individual elements of the list, or any combination thereof. For example, "at least one of A, B, and C" or "one or more of A, B, and C" indicates the possibilities of only A, only B, only C, or any combination of two or more of A, B, and C (e.g., A and B; B and C; A and C; or A, B, and C).

## Claims

1. A work vehicle (100) including a curved structure (120), the curved structure comprising:
a first curved support (122) having a first end and a second end, and extending a length, the first end of the first curved support (122) including a first base portion (130);
a second curved support (124) having a first end and a second end, and extending a length, the second curved support spaced apart a width from the first curved support, the first end of the second curved support (124) including a second base portion (132); and
a curved windshield (140) positioned between and connected to the first and second curved supports, the curved windshield extending upward and rearward beyond a front portion of a seat (112) in the work vehicle;
wherein the first and second base portions (130, 132) are attached to a chassis of the work vehicle to connect the first ends of the first and second curved supports (122, 124) to the work vehicle at a position or location forward of a steering wheel of the work vehicle, such that the first and second curved supports (122, 124) are connected to the vehicle only via the respective first and second base portions (130, 132).

2. The work vehicle (100) of claim 1, further comprising:
a top support (126) connected near a second end of the first curved support (122) and a second end of the second curved support (124).

3. The work vehicle (100) of claim 2, wherein the first curved support (122), the second curved support (124), and the top support (126) are a single piece.

4. The work vehicle (100) of any one of the preceding claims, wherein an angle of an arc formed by the first curved support (122) is greater than forty-five degrees.

5. The work vehicle (100) of claim 4, wherein an angle of an arc formed by the first curved support (122) is greater than seventy-five degrees.

6. The work vehicle (100) of any one of the preceding claims, wherein an angle of an arc formed by the first curved support (122) is less than one hundred thirty-five degrees.

7. The work vehicle (100) of claim 6, wherein an angle of an arc formed by the first curved support (122) is less than one hundred twenty degrees.

## Patentansprüche

1. Arbeitsfahrzeug (100) mit einer gekrümmten Konstruktion (120), wobei die gekrümmte Konstruktion Folgendes umfasst:
einen ersten gekrümmten Träger (122), der ein erstes Ende und ein zweites Ende aufweist und sich über eine Länge erstreckt, wobei das erste Ende des ersten gekrümmten Trägers (122) einen ersten Auflagerteil (130) beinhaltet;
einen zweiten gekrümmten Träger (124), der ein erstes Ende und ein zweites Ende aufweist und sich über eine Länge erstreckt, wobei der zweite gekrümmte Träger um eine Breite von dem ersten gekrümmten Träger beabstandet ist, wobei das erste Ende des zweiten gekrümmten Trägers (124) einen zweiten Auflagerteil (132) beinhaltet; und
eine gekrümmte Frontscheibe (140), die zwischen bzw. mit dem ersten und dem zweiten Träger angeordnet und verbunden ist, wobei die gekrümmte Frontscheibe sich nach oben und nach hinten über einen vorderen Bereich eines Sitzes (112) in dem Arbeitsfahrzeug hinaus erstreckt;
wobei der erste und der zweite Auflagerteil (130, 132) an einem Fahrgestell des Arbeitsfahrzeugs angebracht sind, um das erste Ende des ersten und des zweiten gekrümmten Trägers (122, 124) an einer Position oder Stelle vor einem Lenkrad des Arbeitsfahrzeugs mit dem Arbeitsfahrzeug zu verbinden, so dass der erste und der zweite gekrümmte Träger (122, 124) nur über den ersten bzw. den zweiten Auflagerteil (130, 132) mit dem Fahrzeug verbunden sind.

2. Arbeitsfahrzeug (100) nach Anspruch 1, das ferner Folgendes umfasst:
einen oberen Träger (126), der in der Nähe eines zweiten Endes des ersten gekrümmten Trägers (122) und eines zweiten Endes des zweiten gekrümmten Trägers (124) angefügt ist.

3. Arbeitsfahrzeug (100) nach Anspruch 2, wobei der erste gekrümmte Träger (122), der zweite gekrümmte Träger (124) und der obere Träger (126) ein einzelnes Stück sind.

4. Arbeitsfahrzeug (100) nach einem der vorhergehenden Ansprüche, wobei ein Winkel eines Bogens, der von dem ersten gekrümmten Träger (122) gebildet wird, größer als fünfundvierzig Grad ist.

5. Arbeitsfahrzeug (100) nach Anspruch 4, wobei ein Winkel eines Bogens, der von dem ersten gekrümmten Träger (122) gebildet wird, größer als fünfundsiebzig Grad ist.

6. Arbeitsfahrzeug (100) nach einem der vorhergehenden Ansprüche, wobei ein Winkel eines Bogens, der von dem ersten gekrümmten Träger (122) gebildet wird, kleiner als einhundertfünfunddreißig Grad ist.

7. Arbeitsfahrzeug (100) nach Anspruch 6, wobei ein Winkel eines Bogens, der von dem ersten gekrümmten Träger (122) gebildet wird, kleiner als einhundertzwanzig Grad ist.

## Revendications

1. Véhicule de travail (100) comprenant une structure incurvée (120), la structure incurvée comprenant :
un premier support incurvé (122) ayant une première extrémité et une deuxième extrémité, et s'étendant sur une longueur, la première extrémité du premier support incurvé (122) comprenant une première partie de base (130) ;
un deuxième support incurvé (124) ayant une première extrémité et une deuxième extrémité, et s'étendant sur une longueur, le deuxième support incurvé étant espacé d'une largeur du premier support incurvé, la première extrémité du deuxième support incurvé (124) comprenant une deuxième partie de base (132) ; et
un pare-brise incurvé (140) positionné entre et connecté au premier et au deuxième support incurvé, le pare-brise incurvé s'étendant vers le haut et en arrière au-delà d'une partie avant d'un siège (112) dans le véhicule de travail ;
dans lequel la première et la deuxième partie de base (130, 132) sont attachées à un châssis du véhicule de travail pour connecter les premières extrémités du premier et deuxième support incurvé (122, 124) au véhicule de travail à une position ou emplacement à l'avant d'un volant de direction du véhicule de travail, de sorte que le premier et le deuxième support incurvé (122, 124) sont connectés au véhicule uniquement par les première et deuxième parties de base respectives (130, 132).

2. Véhicule de travail (100) selon la revendication 1, comprenant en outre :
un support supérieur (126) connecté près d'une deuxième extrémité du premier support incurvé (122) et d'une deuxième extrémité du deuxième support incurvé (124).

3. Véhicule de travail (100) selon la revendication 2, dans lequel le premier support incurvé (122), le deuxième support incurvé (124) et le support supérieur (126) sont en une seule pièce.

4. Véhicule de travail (100) selon l'une quelconque des revendications précédentes, dans lequel un angle d'un arc formé par le premier support incurvé (122) fait plus de quarante-cinq degrés.

5. Véhicule de travail (100) selon la revendication 4, dans lequel un angle d'un arc formé par le premier support incurvé (122) fait plus de soixante-quinze degrés.

6. Véhicule de travail (100) selon l'une quelconque des revendications précédentes, dans lequel un angle d'un arc formé par le premier support incurvé (122) fait moins de cent trente-cinq degrés.

7. Véhicule de travail (100) selon la revendication 6, dans lequel un angle d'un arc formé par le premier support incurvé (122) fait moins de cent vingt degrés.
